# EUROPEAN PATENT APPLICATION

(11) **EP 2 037 121 A1**
(43) Date of publication of application: **18.03.2009**
(21) Application number: 07711052.6
(22) Date of filing: 06.03.2007
(51) Int. Cl.: F03D 11/00

(54) **A WIND DRIVEN GENERATOR USING MAGNETIC SUSPENSION**

(30) Priority: 06.03.2006 CN 200610011434
(71) Applicant: Guangzhou Zhongke Hengyuan Energy Technology co., Ltd., Guangzhou Guangdong 510640 (CN)
(72) Inventor: LI, Guo Kun, Guangzhou Guangdong 510640 (CN); ZENG, Zhi Yong, Guangzhou Guangdong 510640 (CN); XIE, Dan Ping, Guangzhou Guangdong 510640 (CN)
(74) Representative: Grünecker, Kinkeldey, Stockmair & Schwanhäusser Anwaltssozietät
(86) International application number: PCT/CN2007/000720
(87) International publication number: WO 2007/101402

(57) **Abstract**

A wind driven generator using magnetic suspension of permanent magnet is disclosed. It includes a fame, a mechanical bearing(3), a shaft(2) and a rotor assembly(1), wherein said shaft is horizontal, said rotor assembly is placed at the front of the shaft, said shaft connects with the frame by the mechanical bearing, one or more sets of permanent magnetic suspension mechanisms are set between the rotor assembly and the mechanical bearing, said permanent magnetic suspension mechanism includes a magnet and a corresponding magnet which are both set around the shaft and fixed respectively to the shaft and the frame, and there is a position offset between the magnet and the corresponding magnet to produce magnetic force upwards against the weight of the rotor assembly. The wind driven generator has the advantages of simple structure, lower start up wind speed and higher output power.

## Description

### TECHNICAL FIELD

The invention relates to a wind driven generator and, particularly, relates to a newly wind driven generator with tiny frictional resistance using magnetic suspension of permanent magnet.

### BACKGROUND

Wind energy is not only clean, environment friendly, renewable, but also widespread, that is, it can be found everywhere and utilized easily, so it is a new energy resource which has a highly developing future. Besides, using wind energy to generate power can't make any negative effects at all, but has advantages of relieving the disasters due to wind, restraining desertification, decreasing or reducing the quantity and intensity of sandstorms.

Wind energy has been recognized and utilized for a long time. Previously, windmills were used to replace human to do some simple work, such as irrigation, pounding rice and so on; presently, people use wind to generate electricity. Whereas because the direction of natural wind changes frequently, the power of natural wind is unpredictable, and the start up wind speed of the conventional mechanical type bearing wind driven generator requires 3m/s at least, but for most places in our country and most time in one year, the wind speed is below 3m/s, so most of the wind resource can not be used but waste in vain. If we can reduce the start up wind speed of wind driven generator, not only will the service efficiency of the wind driven generator be improved, but also much more electric power will be generated thereby, which can brings great economic and social benefit.

The rotor assembly of a conventional mechanical type bearing wind driven generator is generally placed at one end of the shaft of the wind driven generator in the manner of cantilever, which causes that the shaft of the wind driven generator is subject to the gravity of the rotor assembly downwards and produce a non-axial force on the bearing, so that the forces acting on the bearing are imbalance, the force state of the bearing is not good, the frictional resistance is large, besides, the shaft also has the deadweight itself, thereby, the starting resistance moment, the start up wind speed and the cut-in wind speed of a mechanical type bearing wind generator are generally high, but the output power thereof is low(three high and one low). Whereas when people try to reduce the starting resistance moment, the start up wind speed and the cut-in wind speed, the output power is also decreased. So the wind resource with low wind speed is difficult to be utilized.

If making the cantilever end of the shaft of a wind driven generator be in a state of suspension against gravity action of rotor assembly and shaft, the imbalance radial forces acting on the bearing can be eliminated, and the radial forces acting on the bearings of the whole generator set will be reduced greatly, in the meantime the frictional resistance of the bearing will be decreased remarkably, thus the start up wind speed of the wind driven generator will be reduced efficiently. Currently, wind driven generator using magnetic suspension, such as a American wind driven generator using electromagnetic suspension, can not be used in wind power generation field widely, because the suspension bearing need to be controlled at every degree of freedom, which results in that the control system is extremely complicated and large, the cost is greatly high, and the maintenance service and application environment in operation are rigorous.

### SUMMARY

Considering the disadvantage and deficiency of the prior art, the present invention provides a wind driven generator using magnetic suspension of permanent magnet to counteract flexible deformation of cantilever shaft owing to the gravity. The present invention comprises specific magnetic circuit structures, by which magnetic forces upwards are generated to counteract the deadweight of the rotor assembly and the shaft. The magnetic forces not only balance the forces loaded on the mechanical bearing of the wind driven generator, but also reduce the frictional resistance on the bearing, so that the starting resistance moment, the start up wind speed, and the cut-in wind speed of said wind driven generator can be decreased efficiently, in the meanwhile the output power thereof can be improved remarkably.

The technical solution of the present invention is as follows:

A wind driven generator using magnetic suspension permanent magnet comprises a frame, a mechanical bearing, a shaft and a rotor assembly, wherein said shaft is horizontal, said rotor assembly is placed at the front of the shaft, said shaft connects with the frame by the mechanical bearing, which is characterized in that: one or more sets of permanent magnetic suspension mechanisms are set between the rotor assembly and the mechanical bearing, said permanent magnetic suspension mechanism includes a magnet and a corresponding magnet which are both set around the shaft and fixed respectively to the shaft and the frame, and there is a position offset between the magnet and the corresponding magnet to produce magnetic force upwards against the weight of the rotor assembly and the shaft.

Said permanent magnetic suspension mechanism comprises one permanent magnet rotor and one or two permanent magnet stators disposed correspondingly aside thereof, wherein said rotor is set on the shaft and rotates therewith, said stators are fixed to the frame, and the axes corresponding to the rotor and the stators are different in height.

The axis of said stator is higher than that of said rotor, and the magnetic poles corresponding to said stator and said rotor are opposite; or the axis of said stator is lower than that of said rotor, and the magnetic poles corresponding to said stator and said rotor are same.

A pushing and pulling magnetic circuit is formed by said rotor and said stator, namely, said rotor and said stator consist of magnetic blocks respectively, and said magnetic blocks are distributed with alternating polarities extending in the radial direction and each of said magnetic blocks has a ring shape.

An attractive-repulsive magnetic circuit structure is set between the rotor assembly and the mechanical bearing, which can produce attractive or repulsive forces to counteract the axial forces generated by said permanent magnetic suspension mechanism.

Said attractive-repulsive magnetic circuit structure consists of static magnetic ring and movable magnetic ring, wherein said movable magnetic ring is set on the shaft and said static magnetic ring is fixed to the frame.

Said static magnetic ring and said movable magnetic ring are both permanent magnets.

Said permanent magnetic suspension mechanism is a bidirectional pushing and pulling magnetic circuit structure, wherein said rotor is arranged with permanent magnets on its both sides, and there are two said stators and each of them is fixed to the frame and placed symmetrically facing each side of said rotor.

A pushing and pulling magnetic circuit is formed by said rotor and said stator, namely, said rotor and said stator consist of magnetic blocks respectively, and said magnetic blocks are distributed with alternating polarities extending in the radial direction and each of said magnetic blocks has a ring shape.

The technical effect of the present invention is as follows:

The present invention provides a wind driven generator using magnetic suspension of permanent magnet, which comprises one or more sets of permanent magnetic suspension mechanisms that comprise a magnet and a corresponding magnet which are both set around the shaft and fixed respectively to the shaft and the frame, and there is a position offset between the magnet and the corresponding magnet to produce magnetic force upwards to counteract the weight of the rotor assembly and the shaft. Because of the position offset between the magnet and the corresponding magnet, the weight of the rotor assembly and the shaft can be counteracted. In detail, the position offset causes the reaction that the magnet and corresponding magnet with the same polarities repel each other along the radial direction, and the magnet and the corresponding magnet with the apposite polarities attract each other along the radial direction, so that when the magnet and the corresponding magnet are arranged reasonably, the magnetic forces upwards will be generated to counteract the weight downwards of the rotor assembly and the shaft, and the forces loaded on the mechanical bearing will be decreased, especially, the flexible deformation of cantilever shaft will be remarkably reduced and the frictional resistance induced thereby can be decreased, so the starting resistance moment, the start up wind speed and the cut-in wind speed of said wind driven generator are decreased, and the output power of said wind driven generator is improved. Therefore, the present invention can enlarge available rang of wind speed in which wind energy could be utilized and increase the output power, so that the wind resources with low wind speed can be utilized, in the meanwhile the present invention is simple in structure by using permanent magnets, and it is small in volume, low in cost, convenient to operate and easy to maintain, which has great social and economic value.

Since the magnetic circuit formed by the magnet and the corresponding magnet with position offset each other not only produces levitation force upwards, but also produces an axial force which could increase loads on the bearing. In order to eliminate said axial force, an attractive-repulsive magnetic circuit structure can be disposed on the shaft of said wind driven generator to counteract the axial forces. According to the different direction of said axial force generated, an attractive force or a repulsive force induced by the attractive-repulsive magnetic circuit can be used to eliminate said axial force. So it can be avoided that the frictional resistance of the bearing would be increased owing to the axial force generated.

In the present invention, A pushing and pulling magnetic circuit is formed by said stator and said rotor, which can further increase the levitation force upwards, realize the purpose of "three high and one low", manufacture large wind driven generators, and improve the installed capacity of the wind driven generator.

The present invention also provides a bidirectional pushing and pulling magnetic circuit structure by which the axial forces generated can be counteracted by itself, wherein two stators are respectively disposed facing each side of the rotor that has permanent magnets on its both sides, so that the rotor can subject to magnetic forces generated from the two stators. The directions of said two magnetic forces are opposite along the axial direction, so that said two axial forces can be eliminated by each other, and any attractive-repulsive magnetic circuits do not need to be set any more, thus the whole magnetic circuit structure is simple.

The experiment showed that the start up wind speed of the conventional mechanical type bearing wind driven generator is 3.5m/s at least, however the start up wind speed of the wind driven generator in the present invention has reduced to 1.5m/s efficiently, and the output power of the wind driven generator in the present invention has increased by 20%.

### BRIEF DESCRIPITION OF THE DARWINGS

FIG.1 illustrates a schematic drawing according to the invention;
FIG.2 illustrates a structural schematic drawing of the invention with a pushing and pulling magnetic circuit;
FIG.3 illustrates a structural schematic drawing of the invention with a bidirectional pushing and pulling magnetic circuit;
FIG.4 illustrates another structural schematic drawing of the invention with a bidirectional pushing and pulling magnetic circuit;
FIG.5 illustrates a structural schematic drawing of the invention with an attractive-repulsive magnetic circuit shown in the FIG.2.
   1-rotor assembly, 2-shaft, 3-mechanical bearing, 4-generator, 5-stator, 6-rotor, 7-static magnetic ring, 8- movable magnetic ring.

### DETAILED DESCRIPTION OF EMBODIMENTS

The present invention will be described in greater detail with reference to the accompanying drawings as following.

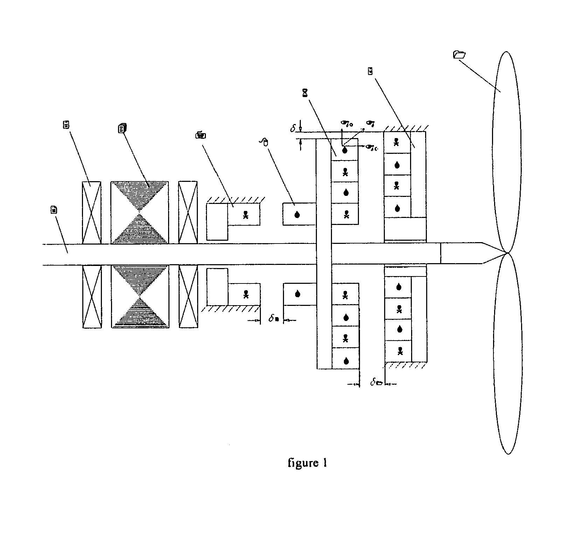

FIG.1 shows an embodiment of the invention.

The conventional wind driven generator set includes a rotor assembly 1, a shaft 2, a mechanical bearing 3, a generator 4 and a frame (not shown in fig.1), wherein the shaft 2 is horizontal, the rotor assembly 1 is generally placed at one end (front end) of the shaft 2, and the generator 4 is placed at the other end of the shaft 2, the mechanical bearings 3 are set on each side of the generator 4 respectively. Because the direction of wind changes frequently, the rotor assembly 1 needs to change its angle continuously to face right to the wind direction, and the shaft 2 connects with the frame by a rotary mechanism.

This shaft structure is a typical cantilever structure, wherein the shaft 2 is subject to flexible deformation due to the gravity of the rotor assembly 1 and produces a non-axial force on mechanical bearing 3, so that when the mechanical bearing 3 rotates with the shaft 2, the flexible deformation of shaft 2 will have seriously negative effect on mechanical bearing 3, and the deadweight of said shaft will also increase the frictional resistance of the mechanical bearing 3. All above -mentioned factors will affect the starting resistance moment, the start up wind speed, the cut-in wind speed and the output power of the wind driven generator.

In this embodiment, a permanent magnetic suspension mechanism is set between rotor assembly 1 and mechanical bearing 3, the permanent magnetic suspension mechanism comprises a magnet fixed to the shaft and a corresponding magnet fixed to the frame, wherein the corresponding magnet has a height position offset with said magnet fixed to the shaft. In detail, said magnet are stator 5, said corresponding magnets are rotor 6, said stator 5 and said rotor 6 respectively consist of permanent magnetic ring-shaped blocks distributed with alternating polarities extending in the radial direction in this embodiment, namely, said stator 5 and said rotor 6 form a set of pushing and pulling magnetic circuit structures. The magnetic pole of outside ring-shaped block of said stator 5 is N pole; and that of the outside ring-shaped block of said rotor 6 is S pole.

In order to increase the bearing capacity, said stator and said rotor are both assembled structures with multiple magnetic rings, and the number of said multiple magnetic rings is four respectively in this embodiment, the polarities of the magnetic rings alternate between N pole and S pole. Of course, even for a mono-polarity stator and a mono-polarity rotor, as long as they can form the position offset, the holding force upwards will also be produced, though it has lower load-bearing capacity and is difficult to manufacture. Instead, the multiple magnetic rings used in the present embodiment, in particular, the pushing and pulling magnetic circuit structure formed by said multiple magnetic rings has relatively large load-bearing capability.

The principle of producing levitation force upwards in the present invention is as follows: stator 5 and rotor 6 are both set around shaft 2, wherein rotor 6 is fixed to shaft 2 and rotates therewith, stator 5 is eccentrically set around shaft 2 and the outside of stator 5 is fixed to the frame, so stator 5 doesn't rotate with shaft 2. The axes corresponding to stator 5 and rotor 6 have a height difference δ , namely, the position offset between the stator magnetic pole and the rotor magnetic pole. When rotor 6 rotates with shaft 2, attractive force F_{δ} induced by stator 5 always acts on rotor 6, attractive force F_{δ} can be decomposed into axial force F_{δZ} and radial force F_{δR}, wherein the radial force F_{δR} has a opposite direction with the gravity of the rotor assembly 1 and shaft 2, and they can be counteracted by each other, so that shaft 2 with rotor assembly 1 can be suspended partially, which can reduce the force loaded on bearing 3, decrease the holding force induced by mechanical bearing 3 and relieve the frictional resistance.

The factors of influencing radial force F_{δR} include the horizontal distance δ ₁ between stator 5 and rotor 6, the height difference δ of the axes of stator 5 and rotor 6, and the magnetic flux density of stator 5 and rotor 6. The F_{δR} could be larger than the gravity of rotor assembly 1 at least by adjusting said factors, even part of gravity of the shaft could also be eliminated, thereby, that only relative small forces load on mechanical bearing 3 can greatly improves the force state of mechanical bearing 3.

In this embodiment, an attractive magnetic circuit is set between the pushing and pulling magnetic circuit structure and bearing 3, wherein said attractive magnetic circuit includes a static magnetic ring 7 and a movable magnetic ring 8, wherein movable magnetic ring 8 is fixed to shaft 2 and rotates therewith, static magnetic ring 7 corresponding to movable magnetic ring 8 is set around shaft 2 and fixed to the frame, the magnetic poles corresponding to static magnetic ring 7 and movable magnetic ring 8 are opposite, so that movable magnetic ring 8 is attracted by static magnetic ring 7 to produce an axial force which has the opposite direction with axial force F_{δZ}. The axial force F_{δZ} can be eliminated by said axial force with the same magnitude of magnetic force by adjusting the distance δ ₂ between movable magnetic ring 8 and static magnetic ring 7 and the magnetic flux density, so the influence of the weight of rotor assembly 1 on mechanical bearing 3 will be eliminated totally, therefore the frictional resistance of mechanical bearing 3 is reduced greatly, as well as the start up wind speed of the wind driven generator is decreased and the output power of the wind driven generator is improved.

The experiment showed that utilizing the wind driven generator in the present invention can efficiently reduces the starting resistance moment, the start up wind speed and the cut-in wind speed, and improves the output power of wind driven generator, wherein said starting resistance moment is reduced by 73.3%, said start up wind speed is reduced from 3.5m/s to 1.5m/s, said cut-in wind speed is reduced by 23.8%, and said output power is improved by 20% at the same wind speed.

In this embodiment, the magnetic pole of outside ring-shaped block of stator 5 can be replaced with S pole, in the meanwhile the magnetic pole of outside ring-shaped block of rotor 6 can be replaced with N pole, the magnitude of attractive force F_{δ} acting on rotor 6 is unchanged. That is, when the axis of stator 5 is higher than that of rotor 6, the magnetic poles corresponding to stator 5 and rotor 6 are opposite, so they could attract each other to produce levitation forces upwards.

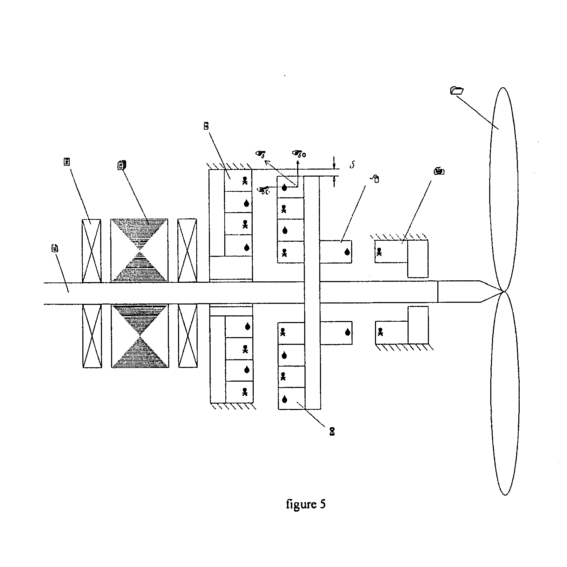

An alternate embodiment is shown in FIG.5, the location on the shaft of stator 5 and rotor 6 is exchanged, which stator 5 is placed at the left side of rotor 6, so that an attractive magnetic circuit is formed by movable magnetic ring 8 and static magnetic ring 7 is placed at the right side of rotor 6 and close to the rotor assembly.

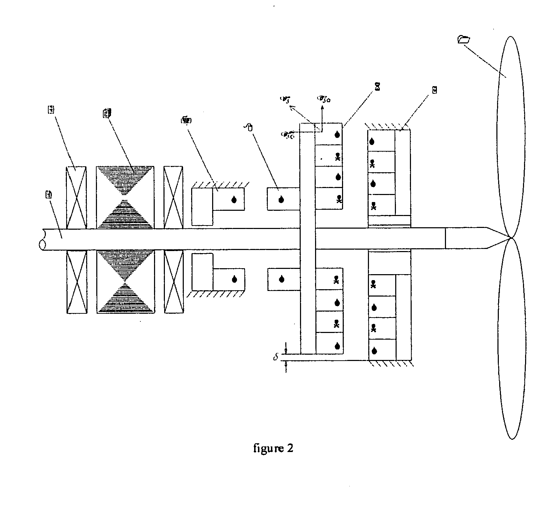

Another alternative embodiment of a pushing and pulling magnetic circuit in accordance with the present invention is shown in FIG.2.

In this embodiment, the axis of stator 5 is lower than that of rotor 6, the axes corresponding to stator 5 and rotor 6 also have a height difference δ. As long as the magnetic poles corresponding to stator 5 and rotor 6 are same, a repulsive force F_{δ} produced for their interaction will act on rotor 6, said repulsive force F_{δ} can be decomposed into radial force F_{δR} upwards and axial force F _{δZ}, wherein the radial force F_{δR} can eliminate the deadweight of the rotor assembly 1 and shaft 2.

In this embodiment, since the axial force F_{δZ} has the reverse direction with that of in the previous embodiment, the attractive magnetic circuit is changed into a repulsive magnetic circuit accordingly. The corresponding magnetic poles of movable magnetic ring 8 and static magnetic ring7 only need to be set with the same polarities, then the repulsive forces produced herewith still has the opposite direction with the axial force F_{δZ}.

This embodiment can also utilize the structure as shown in FIG.5.

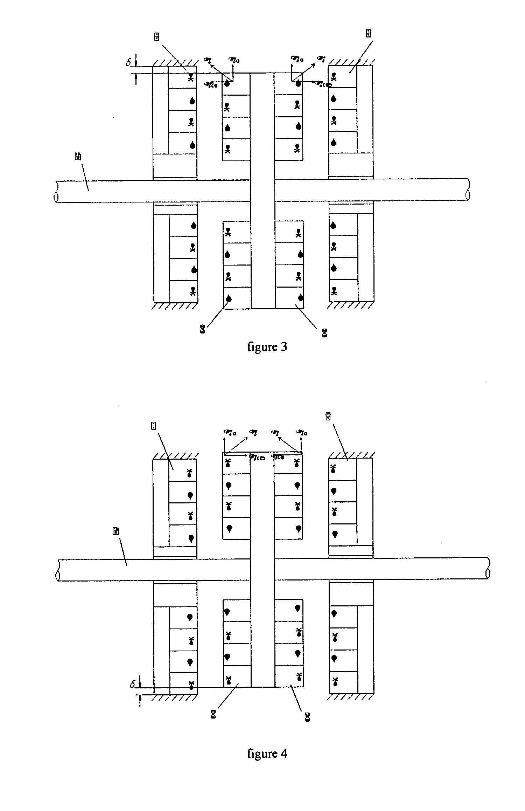

Another two embodiments of the invention are shown in FIG.3 and FIG.4.

The permanent magnetic suspension mechanism shown in the figures is a bidirectional pushing and pulling magnetic circuit structure, wherein rotor 6 is an assembled structure with multiple magnetic blocks set at its both sides, and two stators 5 are symmetrically disposed facing each side of rotor 6, which forms two sets of pushing and pulling magnetic circuits, and the axes corresponding to stator 5 and rotor 6 have a height difference δ.

In FIG.3, the axis of stator 5 is higher than that of rotor 6. Just as the embodiment shown in FIG.1, the corresponding magnetic poles of stator 5 and rotor 6 are opposite, so each side of rotor 6 is subject to attractive force induced by corresponding stator 5 respectively, wherein the radial forces F_{δR} are both upwards, and the axial forces F_{δZ} have the same magnitude with the opposite direction and so can be eliminated by each other, thus there is no need to set another attractive magnetic circuit or repulsive magnetic circuit in this embodiment, thereby the structure thereof is simple.

In FIG.4, the axis of stator 5 is lower than that of rotor 6. Just as the embodiment shown in the FIG.2, the corresponding magnetic poles of stator 5 and rotor 6 are same, so each side of rotor 6 is subject to repulsive force induced by corresponding stator 5 respectively, wherein the radial forces F_{δR} are both upwards, and the axial forces F_{δZ} have the same magnitude with the opposite direction and so can be eliminated by each other, thus there is also no need to set another attractive magnetic circuit or repulsive magnetic circuit in this embodiment, thereby the structure thereof is simple.

In the embodiments as shown in FIG.3 and FIG.4, a rotor 6 is of the structure with double permanent magnets and each of the permanent magnet having the same configuration consist of multiple magnetic blocks, of course, rotor 6 also could be of the structure of single permanent magnetic block or single permanent magnetic ring or double permanent magnets with different configurations.

The contents described above are only preferred embodiments in accordance with the invention. It is noted that according to the spirit and truth of the invention, those skilled in the art will found apparent various changes and modifications, but all such changes and modifications are falling within the protected scope of the invention.

## Claims

1. A wind driven generator using magnetic suspension of permanent magnet comprises a frame, a mechanical bearing, a shaft and a rotor assembly, wherein said shaft is horizontal, said rotor assembly is placed at the front of the shaft, said shaft connects with the frame by the mechanical bearing, which is **characterized in that:** one or more sets of permanent magnetic suspension mechanisms are set between the rotor assembly and the mechanical bearing, said permanent magnetic suspension mechanism includes magnet and corresponding magnet which are both set around the shaft and fixed to the shaft and the frame respectively, and there is a position offset between the magnet and the corresponding magnet can produce magnetic force upwards to counteract the weight of the rotor assembly.

2. A wind driven generator using magnetic suspension of permanent magnet as claimed in claim 1, **characterized in that:** said permanent magnetic suspension mechanism includes one permanent magnet rotor and one or two permanent magnet stators disposed correspondingly aside thereof, wherein said rotor is set on the shaft and rotates therewith, said stators are fixed to the frame, and the axes of the rotor and the stators are different in height.

3. A wind driven generator using magnetic suspension of permanent magnet as claimed in claim 2, **characterized in that:** the axis of said stator is higher than that of said rotor, and the magnetic poles corresponding to said stator and said rotor are opposite; or the axis of said stator is lower than that of said rotor, and the magnetic poles corresponding to said stator and said rotor are same.

4. A wind driven generator using magnetic suspension of permanent magnet as claimed in claim 3, **characterized in that:** a pushing and pulling magnetic circuit is formed by said rotor and said stator, namely, said rotor and said stator consist of magnetic blocks respectively, and said magnetic blocks are distributed with alternating polarities extending in the radial direction and each of said magnetic blocks has a ring shape.

5. A wind driven generator using magnetic suspension of permanent magnet as claimed in anyone of the preceding claims, **characterized in that:** An attractive-repulsive magnetic circuit structure is set between the rotor assembly and the mechanical bearing, which can produce attractive or repulsive forces to counteract the axial forces generated by said permanent magnetic suspension mechanism.

6. A wind driven generator using magnetic suspension of permanent magnet as claimed in claim 5, **characterized in that:** said attractive-repulsive magnetic circuit structure consists of static magnetic ring and movable magnetic ring, wherein said movable magnetic ring is set on the shaft and said static magnetic ring is fixed to the frame.

7. A wind driven generator using magnetic suspension of permanent magnet as claimed in claim 6, **characterized in that:** said static magnetic ring and said movable magnetic ring are both permanent magnets.

8. A wind driven generator using magnetic suspension of permanent magnet as claimed in claim 3, **characterized in that:** said permanent magnetic suspension mechanism is a bidirectional pushing and pulling magnetic circuit structure, wherein said rotor is arranged with permanent magnets on its both sides, and there are two said stators and each of them is fixed to the frame and placed symmetrically facing each side of said rotor.

9. A wind driven generator using magnetic suspension of permanent magnet as claimed in claim 8, **characterized in that:** said rotor and said stator consist of magnetic rings respectively, and said magnetic rings are distributed with alternating polarities extending in the radial direction.

10. A wind driven generator using magnetic suspension of permanent magnet as claimed in claim 9, **characterized in that:** said magnetic rings of said stator and said rotor have the corresponding same or the opposite magnetic poles.
